# EUROPÄISCHE PATENTSCHRIFT

(11) **EP 1 734 023 B1**
(45) Veröffentlichungstag und Bekanntmachung des Hinweises auf die Patenterteilung: **06.03.2013**
(21) Anmeldenummer: 06114924.1
(22) Anmeldetag: 02.06.2006
(51) Int. Cl.: C04B 35/80, C04B 35/111

(54) **Einstellung des Faservolumengehaltes in oxidkeramischen Faser-Verbundwerkstoffen**
Adjustment of the fibre content by volume of oxide ceramic fibre - composite materials
Le réglage de la teneur volumétrique en fibres des composites en céramique à base d'oxydes renforcés par des fibres

(30) Priorität: 14.06.2005 DE 102005027561
(43) Veröffentlichungstag der Anmeldung: 20.12.2006
(73) Patentinhaber: Deutsches Zentrum für Luft- und Raumfahrt e.V., 51147 Köln (DE)
(72) Erfinder: Kanka, Bernhard, 51465, Bergisch Gladbach (DE)
(74) Vertreter: von Kreisler Selting Werner

(56) Entgegenhaltungen:
- WO-A-99/52838
- KANKA B ET AL: "Aluminosilicate fiber/mullite matrix composites with favorable high-temperature properties" JOURNAL OF THE EUROPEAN CERAMIC SOCIETY, ELSEVIER SCIENCE PUBLISHERS, BARKING, ESSEX, GB, Bd. 20, Nr. 5, Mai 2000 (2000-05), Seiten 619-623, XP004193040 ISSN: 0955-2219
- SCHNEIDER H ET AL: "POROUS ALUMINO SILICATE FIBER/MULLITE MATRIX COMPOSITES" CERAMIC TRANSACTIONS, XX, XX, Bd. 115, 2000, Seiten 415-434, XP009071836 ISSN: 1042-1122
- SCHMUCKER M ET AL: "Temperature-induced fibre/matrix interactions in porous alumino silicate ceramic matrix composites" JOURNAL OF THE EUROPEAN CERAMIC SOCIETY, ELSEVIER SCIENCE PUBLISHERS, BARKING, ESSEX, GB, Bd. 20, Nr. 14-15, Dezember 2000 (2000-12), Seiten 2491-2497, XP004224339 ISSN: 0955-2219
- GORING JÜRGEN ET AL.: "A potential oxide/oxide ceramic matrix composite for gas turbine appplications" PROCEEDINGS OF THE ASME TURBO EXPO 2003, Bd. 1, 2003, Seiten 621-624, XP009071827

## Beschreibung

Die Erfindung betrifft ein Verfahren zur Herstellung eines Faser-Verbundwerkstoffes unter Verwendung eines Schlickers enthaltend oxidkeramisches Pulver mit verschiedenen Korngrößenfraktionen und einen so hergestellten Faser-Verbundwerkstoff.

Oxidkeramiken haben prinzipiell ein hohes Anwendungspotential sowohl als Strukturwerkstoffe als auch zum thermischen Schutz von Brennkammern und für heißgasleitende Komponenten in Flugzeugtriebwerken und in stationären Gasturbinen. Hier treten Temperaturen von mehr als 1200 °C sowie thermomechanische Materialbelastungen durch schnelle Temperaturwechsel und lokale thermische Beaufschlagung auf.

Derzeitige oxidkeramische Faser-Verbundwerkstoffe mit ausreichenden mechanischen Eigenschaften für den ingenieurmäßigen Einsatz unter extremen thermischen Bedingungen, wie beispielsweise der keramische Werkstoff WHIPOX® (wound highly porous oxide ceramic matrix composite, DE 198 26 792 C2), basieren auf kontinuierlichen, oxidkeramischen Fasern oder Geweben der Firmen 3M (Nextel® 610 und Nextel® 720) oder Nivity Company Ltd., Tokyo, Japan (R-960D). Der hohe Preis dieser Aluminumsilikat- oder Aluminiumoxidfasern bestimmt dabei in hohem Maße den Preis des hieraus hergestellten keramischen Komposits, da der Faservolumenanteil herstellungsbedingt üblicherweise mehr als 30 Vol.% beträgt.

Es werden oxidkeramische Faser-Verbundwerkstoffe in verschiedenen Forschungseinrichtungen und Firmen intensiv entwickelt und präsentiert, die sich vor allem durch extreme Thermoschock- und Thermoermüdung auszeichnen. Diese Keramiken basieren bevorzugt auf oxidkeramischen Fasergeweben der Firmen 3M (Nextel® 610 und Nextel® 720), Nivity Company Ltd , Tokyo, Japan (R-960D) oder Rath.

Keramikblech ist eine Oxidfaser-verstärkte Oxidkeramik, entwickelt vom Unternehmen Walter E.C. Pritzkow Spezialkeramik, Stuttgart. Der Faser-Verbundwerkstoff besteht aus hochtemperaturbeständigen Endlosfasern und Matrizes basierend auf Al₂O₃, SiO₂ und Mullit. Der Werkstoff zählt zu der Klasse der Oxide Ceramics Matrix Composites, kurz OCMC. Die Herstellung der Bauteile erfolgt mit ähnlichen Laminiertechnologien, die bei der Herstellung von faserverstärkten Kunststoffen verwendet werden. Durch entsprechende Formen, Verfahren und Anlagen können Platten, Rohre und komplexe dünnwandige Leichtbaustrukturen hergestellt werden. Dieser oxidkeramischer Faser-Verbundwerkstoff, der in relativ kleinen Stückzahlen beispielsweise im Ofenbau, in der Brennertechnik, Energie-oder Gießereitechnik zum Einsatz kommt, kann entsprechend den Herstellerangaben langzeitig bei Temperaturen unterhalb von 1200°C und nur kurzzeitig bei Temperaturen bis zu 1700°C eingesetzt werden. Die Zug- und Biegefestigkeit liegen auf einem niedrigen Niveau.

COI Ceramics, Inc. (San Diego, California, USA; http://www.coiceramics.com) hat einen oxidkeramischen Werkstoffverbund vor allem für den Einsatz in kommerziellen Gasturbinen entwickelt. Die Herstellung der Bauteile erfolgt mit ähnlichen Laminiertechnologien, die bei der Herstellung von faserverstärkten Kunststoffen verwendet werden, wobei die finale Formgebung der Grünling durch eine Vakuumtechnik erfolgt. Ein Fasergewebe wird hierbei mit dem Schlicker infiltriert und anschließend über eine Form gelegt und in einem Vakuumschritt an dieser Form unter Bildung eines Grünlings getrocknet und anschließend bei etwa 1150 °C gesintert. Basierend auf Aluminiumsilikat erreicht dieser Werkstoff eine Zugfestigkeit bis etwa 365 MPa und eine interlaminare Scherfestigkeit von etwa 12 MPa bei Faservolumengehalten um 50 Vol.%. Hierbei werden Nextel® 312, Nextel® 550, Nextel® 610 und Nextel® 720-Fasern von 3M eingesetzt.

Das Material Zentrum Leoben präsentiert (R. Simon, P. Supancic, Proceedings of the 28th International Conference & Exposition on Advanced Ceramics & Composites, January 25-30, 2004, Cocoa Beach, Florida; Verbundwerkstoffe, Hrsg. H.-P. Dregischer, Wiley-VCH Verlag, Juli 2003, S. 298 bis 303) die Entwicklung und kolloidale Herstellung eines neuen Oxid/Oxid-Verbundwerkstoffes. Die Laminatherstellung erfolgt durch Infiltration der Keramikgewebe mit der niedrigviskosen, kolloidalen Suspension mit niedrigem Feststoffgehalt in klassischem naß-in-naß Handlaminierverfahren. Das Laminat wird mittels Vakuumsacktechnik entgast und verdichtet. Die Verfestigung des Laminates bei Raumtemperatur dauert 24 bis 48 h. Mit einem Faservolumengehalt von 46 bis 48 % erreicht man eine Zugfestigkeit bis etwa 300 MPa und eine interlaminare Scherfestigkeit (ILLS) von etwa 14 MPa. Die interlaminare Scherfestigkeit kann nach DIN 65148 gemessen werden und gibt den Quotienten an aus der Kraft, die im Zugversuch zum Bruchversagen innerhalb der Scherfläche führt, und der Scherfläche.

Für die Herstellung von oxidischen CMCs entwickelt das Fraunhofer ISC (A. Rüdinger, W. Glaubitt, 15. Symposium Verbundwerkstoffe und Werkstoffverbunde, 6.-8. April 2005, Universität Kassel) Bindersysteme und Füllpulver auf der Basis einer supramolekularen organischen Vorstufe. Durch Tauchbeschichtung mit einem Beschichtungs-Sol und anschließender thermischer Aufarbeitung wird eine Zwischenschicht auf die Fasern aufgebracht. Das Erweichen der Bindersysteme bei Temperaturen von 100 bis 140 °C ermöglicht eine Nachverdichtung der CMC- Grünling, was zu erhöhten Fasergehalten der CMC's im Bereich von etwa 30 Vol.% führt. Die Zugfestigkeit dieser Keramikverbunde beträgt 152 MPa (0°/90°), die 3-Punkt-Biegefestigkeit um 250 MPa und die ILSS 4 MPa.

DE 198 26 792 A1 beschreibt ein thermisch hochbeständiges und oxidationsbeständiges Faserverbundmaterial aus oxidkeramischen Fasern sowie ein Verfahren zu dessen Herstellung.

EP 02 60 867 A1 beschreibt eine Ofenauskleidung aus faserhaltigem keramischem Material.

US 6,472,059 B2 beschreibt einen sandwichartigen Verbund von Langfaser-CMC (Ceramic Matrix Composit) und Kurzfaser-CMC. In dem beschriebenen Verfahren wird ein polymerabgeleiteter Grünling durch Pyrolyse keramisiert. Die Verbindung der Lang- und Kurzfaserkomponente erfolgt im Feuchtzustand.

US 5,198,282 A und US 5,376,598 A beschreiben einen keramischen Isolationsverbundwerkstoff. Hierbei weist die Langfaserkomponente eine hohe Dichte auf und kann sogar glasartig sein. Die Matrix enthält Whisker, die aus gesundheitlichen Gründen problematisch sind. Die Verbindung der Lang- und Kurzfaserkomponenten erfolgt im Feuchtzustand.

US 6,733,907 D2 beschreibt einen Verbund aus keramischer Trägerstruktur und keramischer Wärmedämmschicht. Die Wärmedämmschicht weist dabei eine höhere Temperaturbeständigkeit als die langfaserverstärkte Trägerstruktur auf und schützt diese gegen zu hohe thermische Belastungen. Voraussetzung für dieses Konzept ist eine rückseitige Kühlung und ein hinreichender Wärmetransport durch die Trägerstruktur.

DE 10 2004 049 406 A2 beschreibt ein mehrschichtiges Formteil aus hochtemperaturbeständigen, chemisch resistenten und mechanisch schadenstoleranten Keramikwerkstoffen sowie ein Verfahren zur Herstellung des Formteils.

Nachteil des Standes der Technik ist der aus der üblichen Herstellungstechnik resultierende hohe Fasergehalt der keramischen Faser-Verbundwerkstoffe von typischerweise mehr als 30 Vol.%, der sich zum einen durch die Partikelgrößenverteilung der verwendeten oxidkeramischen Pulver ergibt (beispielsweise Aluminiumsilikat beziehungsweise Aluminiumoxidpulver), das in Form einer Suspension in die Fasergewebe beziehungsweise einzelne, kontinuierliche Rovings (also Bündel von Einzelfilamenten) infiltriert wird. Zum anderen wird der Fasergehalt aber auch stark von der dynamischen Viskosität der Suspension beeinflusst. Ausreichende Mengen an kleinen Partikeln sind jedoch notwendig für eine ausreichende Sinteraktivität in einem Temperaturbereich, der nicht zur Schädigung (Kristallisation) der Fasern führt. Typischerweise führt jedoch eine hohe Menge an kleinen Partikeln zu einer erhöhten dynamischen Viskosität. Niedrige dynamische Viskosität der Suspension ist jedoch Grundvoraussetzung für eine vollständige Infiltration der Faserbündel beziehungsweise Fasergewebe. Ist jedoch der Feststoffgehalt zu niedrig, um eine niedrige dynamische Viskosität des Schlickers zu erreichen, kommt es zu einem unkontrollierbar hohen Faservolumengehalt. Durch den hohen Fasergehalt kann es zu Kontakt unter den Fasern kommen, was zu einer Verschlechterung der mechanischen Eigenschaften führt.

Die der Erfindung zu Grunde liegende Aufgabe ist es, den Fasergehalt durch bestimmte Herstellungstechniken gezielt auch besonders niedrig einzustellen zu können, um so den unterschiedlichen Ansprüchen vor allem bezüglich Materialkosten aber auch der Eigenschaften gerecht zu werden.

Diese Aufgabe wird in einer ersten Ausführungsform gelöst durch ein Verfahren zur Herstellung eines oxidkeramischen Faser-Verbundwerkstoffes, umfassend die folgende Schritte:
a) Infiltrieren von oxidkeramischen Endlosfasern mit einem Schlicker enthaltend sinteraktives oxidkeramisches Pulver mit wenigstens zwei voneinander verschiedenen Korngrößenfraktionen unterschiedlicher Maxima in der Korngrößenverteilung, wobei mindestens eine der Korngrößenfraktionen eine mittlere Korngröße gewichtet nach Volumenanteilen von bis zu 1 µm und mindestens eine weitere Korngrößenfraktion eine mittlere Korngröße gewichtet nach Volumenanteilen von mindestens 2 um aufweist, wobei die Korngrößenfraktion mit der größeren mittleren Korngröße gewichtet nach Volumenanteilen einen geringeren Volumenanteil ausmacht, als die Korngrößenfraktion mit der kleineren mittleren Korngröße, wobei die Korngrößenfraktionen im Faser-Verbundwerkstoff unabhängig voneinander zu jeweils mindestens 10 Vol.% vorliegen,
b) Trocknen des gemäß Schritt a) erhaltenen Grünlings, und
c) Sintern des Grünlings unter Bildung des oxidkeramischen Faser-Verbundwerkstoffes.

Endlosfasern im Sinne der Erfindung sind Fasern, gesponnene Fäden, Rovings, Stränge, Schnüre, Vliese oder Gewebe, deren Länge im wesentlichen durch die Dimensionen des aus dem erfindungsgemäßen Faser-Verbundwerkstoffes hergestellten Formkörpers beschränkt wird.

Sintern (auch Sinterung) im Sinne der Erfindung ist ein urformendes Fertigungsverfahren für Formteile. Es gestattet die Herstellung von Fertigteilen und Halbzeugen unter Umgehung der flüssigen Phase. Dabei werden Pulvermassen unter Kompaktierung zunächst so geformt, dass wenigstens ein minimaler Zusammenhalt der Pulverpartikel gegeben ist. Dieser sogenannte Grünling wird im Anschluss durch Wärmebehandlung unterhalb der Schmelztemperatur verdichtet. Die Herstellung des Grünlings erfolgt dabei beispielsweise entweder durch Verpressen von Pulvermassen, Schlickerguss oder durch einen Wickelprozess. Unter Sintertemperatur im Sinne der Erfindung wird diejenige Temperatur verstanden, bei der der getrocknete Grünkörper in den Faser-Verbundwerkstoff als Endprodukt überführt wird.

Der Sintervorgang läuft in drei Stadien ab, während derer sich die Porosität und das Volumen des Grünlings deutlich verringert. Im ersten Stadium erfolgt lediglich eine Verdichtung des Grünlings, wohingegen sich im zweiten Stadium die offene Porosität deutlich verringert. Die Festigkeit der Sinterkörper beruht auf den im dritten Stadium gebildeten Sinterhälsen, die durch Oberflächendiffusion zwischen den Pulverpartikeln entstehen.

Da es beim Sintern nicht zum Schmelzen der Partikel kommt, können nach dem Sintervorgang die gesinterten Partikel beispielsweise mit Hilfe der Elektronenmikroskopie identifiziert und bezüglich ihrer Größe charakterisiert werden.

Im Unterschied zum Sintern muss die Kalzinierung gesehen werden. Bei der Kalzinierung werden keramische Pulver ohne zu schmelzen oder sich zu verbinden zu einer so hohen Temperatur erhitzt, dass flüchtige Stoffe entfernt oder chemische Veränderungen bewirkt werden können. Hierbei wird das Pulver nicht kompaktiert. Üblicherweise würde der Fachmann dabei die Kalzinierungstemperatur so niedrig einstellen, dass die Sinteraktivität der keramischen Pulver hinreichend hoch bleibt. Kalzinierung im Sinne der Erfindung unterscheidet sich von der üblichen Definition dadurch, dass eine Kalzinierungstemperatur gewählt wird, die mindestens bei derjenigen Temperatur liegt, bei der sich Sinterhälse bilden können und höchstens unterhalb der Schmelztemperatur liegt, wobei jedoch die Rieselfähigkeit beim Kalzinieren erhalten bleibt. Es kann also bei der Kalzinierung im Sinne der Erfindung zur Bildung von Sinterhälsen kommen, die bei der anschließenden Vermahlung zerstört werden. Daher kann auch die Zeitdauer der Kalzinierung so gewählt werden, dass eine weitreichende Bildung von Sinterhälsen vermieden wird. Durch das anschließende Aufmahlen in Schritt a) können die Sinterhälse vorzugsweise wenigstens teilweise zerstört werden. Hierdurch entstehen an den Bruchstellen aktive Punkte des oxidkeramischen Pulvers. Der Zeitraum der Kalzinierung wird deshalb vorzugsweise in einem Bereich von 1 bis 5 h ausgewählt.

Trocknen im Sinne der Erfindung bezeichnet die Entfernung von Wasser durch Temperatureinwirkung vorzugsweise in einem Bereich von 40 bis 100 °C vorteilhafterweise über einen Zeitraum in einem Bereich von 0,5 bis 8 Stunden.

Durch Einstellung einer bi-modalen oder multi- beziehungsweise polymodalen Partikelgrößenverteilung ist es nun möglich, den Faservolumenanteil in einem Bereich zwischen etwa 8 Vol.% und 50 Vol.% gezielt einzustellen. Zum einen ist ein hoher Anteil an sehr feinen Partikeln vorhanden, die eine ausreichende Sinteraktivität gewährleisten - zum anderen aber auch ein ausreichender Anteil an gröberen Partikeln, die einen größeren Faserabstand und damit einen geringeren Fasergehalt bewirken. Damit ergeben sich Vorteile gegenüber dem Stand der Technik hinsichtlich Materialkosten, Dichte der Keramikverbunde und Produktionskosten. Ein wichtiger Unterschied zu bereits bekannten FaserVerbundwerkstoffen besteht vor allem darin, dass dort üblicherweise oxidkeramische Pulver mit nur einer engen Partikelgrößenverteilung eingesetzt werden.

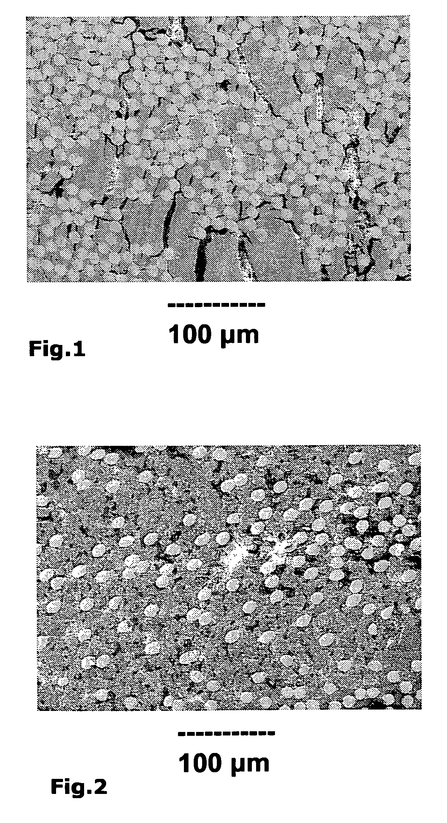

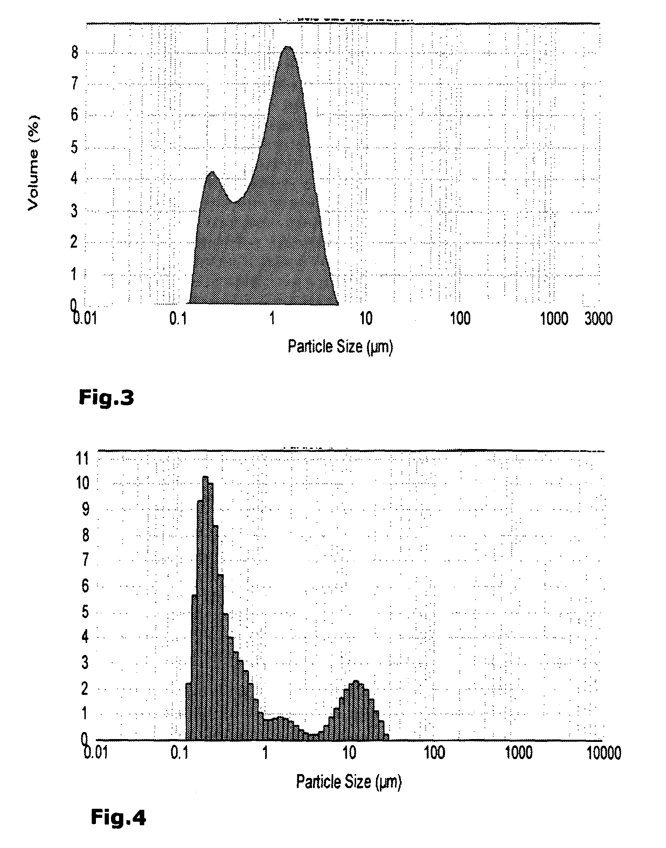

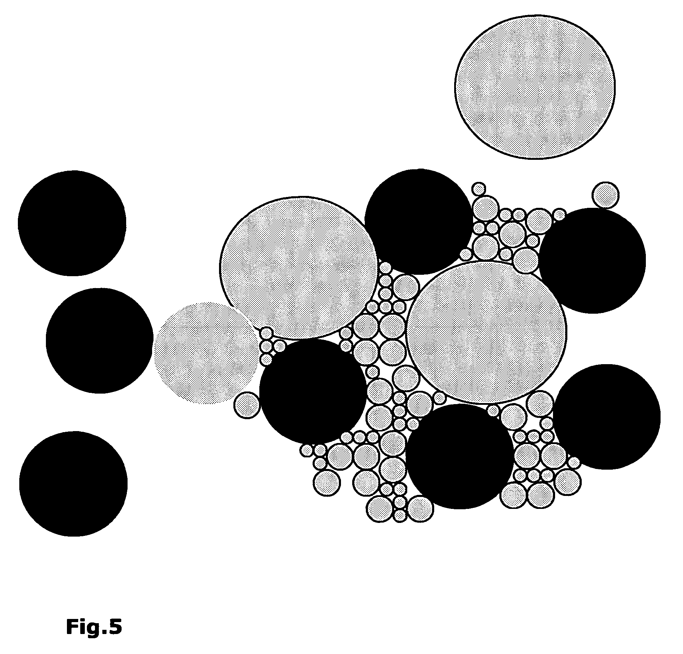

In Fig. 1 bis Fig. 5 ist der Einfluss der Partikelverteilung auf den Faservolumengehalt deutlich erkennbar. Fig. 3 zeigt die Partikelverteilung mit zwei Maxima bei etwa 0,2 µm und etwa 1,5 µm was zu einem Faservolumengehalt von 35 % führt (siehe rasterelektronenmikroskopische Aufnahme Fig. 2). In Fig. 4 ist eine Partikelverteilung mit drei Maxima bei etwa 0.2 µm, etwa 2 µm und etwa 12 µm erkennbar was zu einem Faservolumengehalt von 11 % führt (siehe rasterelektronenmikroskopische Aufnahme Fig. 2). Fig. 5 veranschaulicht schematisch verschiedene Korngrößenfraktionen, wie sie im Rahmen der Erfindung eingesetzt werden können.

Ein wesentlicher Vorteil des erfindungsgemäßen Verfahrens gegenüber Verfahren des Standes der Technik ist, dass neben einer hohen Festigkeit, vorzugsweise mehr als 50 MPa im 3-Punkt-Biegeversuch, die extrem hohe Schadenstoleranz (nicht sprödes Bruchverhalten) des neuen Faserverbundmaterials ohne Beschichtung der Fasern realisiert wird. Diese Festigkeit wird vorzugsweise unter Verwendung der Faser Nextel^{®} 720 erreicht. Biegeproben mit einer Höhe von 3,6 mm, einer Breite von etwa 10 mm und einer Prüflänge von 60 mm halten nach einer Durchbiegung von etwa 0,1 bis 0,2 mm noch eine Biegespannung von etwa 60% der maximalen Biegespannung. Bei weiterer Durchbiegung fällt die Biegespannung zunächst nur auf mindestens 25% der maximalen Biegespannung. Besonders bemerkenswert in diesem Zusammenhang ist, dass bei Durchführung des erfindungsgemäßen Verfahrens keine visuell sichtbaren makroskopischen Schrumpfrisse auftraten.

Das keramische Material der Endlosfasern und/oder des oxidkeramischen Pulvers kann vorzugsweise jeweils unabhängig voneinander überwiegend x₁ Al₂O₃ • y₁ SiO₂ enthalten, insbesondere daraus bestehen, wobei x₁ eine Zahl im Bereich von 1 bis 5 und y₁ eine Zahl im Bereich von 0 bis 4 ist. Das jeweilige keramische Material kann alternativ vorzugsweise auch SiO₂, MgO, AlO(OH), Al₂O₃, ZrO₂ sein und/oder als Füllstoff und/oder Dotierung enthalten. Besteht das oxidkeramische Pulver aus AlO(OH), Al₂O₃ oder Mischphasen oder Mischungen derselben, so wird es vorzugsweise bei einer Temperatur in einem Bereich von 950 bis 1350 °C, insbesondere in einem Bereich von mehr als 1150 bis 1350 °C kalziniert.

Die erfindungsgemäße Korngrößenverteilung kann vorteilhafterweise durch Mahlen eines oxidkeramischen Pulvers in der Art erhalten werden, so dass neben einer "feinen" mittleren Korngröße von bis zu 1 µm ein "grober" Anteil mit einem Korngrößenanteil im Bereich mindestens 2 µm vorhanden ist.

Vorzugsweise werden im erfindungsgemäßen Verfahren gesinterte oxidkeramische Partikel mit verschiedenen Korngrößenfraktionen eingesetzt, wobei mindestens eine "feine" der Korngrößenfraktionen eine mittlere Korngröße gewichtet nach Volumenanteilen von mindestens 0,1 µm, besonders bevorzugt bis zu 0,5 µm aufweist und mindestens eine weitere "grobe" Korngrößenfraktion eine mittlere Korngröße gewichtet nach Volumenanteilen von mindestens 5 µm, besonders bevorzugt mindestens 10 µm, ganz besonders bevorzugt bis zu 20 µm aufweist. Die Fraktionen sind im Faser-Verbundwerkstoff unabhängig voneinander zu jeweils mindestens 10 Vol.%, besonders bevorzugt mindestens 20 Vol.% vorhanden, wobei die "grobe" Korngrößenfraktion einen geringeren Volumenanteil ausmacht als eine "feine" Korngrößenfraktion. Durch diese Maßgaben können zum einen die Fasern hinreichend voneinander beabstandet werden und andererseits der Verbundwerkstoff aufgrund effizienter Sinterung gute mechanische Eigenschaften aufweisen. Weiterhin sind auch hinreichend kleinere Partikel für eine effiziente Sinterung vorhanden.

Endlosfasern im Sinne der Erfindung können Einzelfilamentfasern oder auch Rovings (Faserbündel) sein. Die Endlosfasern bestehen vorzugsweise aus Silikaten, Aluminiumoxiden, Aluminiumhydroxiden, Mischphasen dieser Stoffe oder Mischungen dieser Stoffe. Als oxidationsbeständige, aluminiumoxidreiche Mullitfasern im Sinne der vorliegenden Erfindung werden besonders bevorzugt Fasern des Typs Nextel® 610 3000 Denier oder Nextel® 720 3000 Denier der Firma 3M (USA) eingesetzt. Im Rahmen der Erfindung können beispielsweise auch Fasern mit einem Fasergewicht in einem Bereich von 1500 bis 10000 Denier eingesetzt werden. Diese Aluminiumsilikatfaser hat im Vergleich zu anderen Faserqualitäten die zur Zeit besten mechanischen Eigenschaften im Hochtemperaturbereich in oxidierender Atmosphäre. Die Zugfestigkeit der Faser Nextel® 720 liegt bei einer Prüflänge von 25 mm, etwa bei 2100 MPa. der E-Modul beträgt etwa 260 GPa. Die Endlosfasern werden, wie vom Hersteller geliefert, vorteilhafterweise zunächst durch einen Rohrofen mit einer Temperatur im Bereich von 900 bis 1100 °C mit einer Geschwindigkeit in einem Bereich von vorzugsweise 3 bis 50 m/min gezogen, um das Sizing (epoxidartige Verklebung des Rovings, um eine schadlose Bearbeitung der Fasern zu gewährleisten) auszubrennen.

Anschließend erfolgt vorteilhafterweise die Tränkung der kontinuierlichen Fasern mit dem oben beschriebenen Schlicker, vorzugsweise auf Basis des oxidkeramischen Pulvers mit einer Oberfläche nach B.E.T. von bis zu 150 m²/g, über ein Rollensystem.

Die danach vorzugsweise angetrockneten Fasern werden vorteilhafterweise auf eine in einer klimatisierten Kammer befindlichen und mit einer Trennfolie belegten Trommel aufgewickelt.

Vorteilhafterweise werden die infiltrierten Fasern noch vor der Verdichtung zum Grünling angetrocknet, wodurch unmittelbar Einfluss auf die dynamische Viskosität der Suspensionen genommen werden kann. Im Stand der Technik kann die dynamische Viskosität nach der Infiltration der kontinuierlichen Fasern oder Fasergewebe nicht mehr verändert werden.

Zur Herstellung von Rohren erfolgt die Trocknung direkt auf der Trommel. Zur Fertigung anderer geometrischer Formen werden vorteilhafterweise die noch feuchten Fasergelege nach Einschneiden mit einem Skalpell von der Trommel entfernt und durch Unterlegen entsprechender Formen die gewünschte Geometrie nach vollständiger Trocknung realisiert. Dabei können auch mehrere dünne Lagen im noch feuchten Zustand gestapelt und durch Pressen zusammengefügt werden. Somit ist auch die Herstellung von 1D bis 2D-Verbunden durchführbar. Anschließend wird der so hergestellte Grünling vorteilhafterweise in einem Luftofen oder Kammerofen freistehend bei einer Temperatur von 1100 bis 1400 °C gesintert. Somit können beispielsweise auch keramische Federn hergestellt werden. Die Grünlinge lassen sich nach der vollständigen Trocknung leicht mechanisch bearbeiten - beispielsweise durch Bohren, Schleifen, Fräsen oder Sägen mit herkömmlichem Werkzeug.

Der im erfindungsgemäßen Verfahren eingesetzte Schlicker ist vorzugsweise frei von Kurzfasern mit einer Länge von weniger als 2 cm. Diese auch als Whisker bezeichneten Kurzfasern sind gesundheitsschädlich und limitieren damit das erfindungsgemäße FaserVerbundmaterial in seiner Anwendung.

Vorteilhafterweise mahlt man die Inhaltsstoffe des Schlickers über einen Zeitraum in einem Bereich von 1 bis 60 Minuten, bevorzugt 5 bis 20 Minuten, vorzugsweise unter Verwendung einer Planetenkugelmühle mit ZrO₂ - Mahlkugeln als Mahlmedium. Durch das kurze Anmahlen wird gewährleistet, dass eine gröbere Korngrößenfraktion im Pulver verbleibt. Vorteilhafterweise mahlt man nach dem Vermischen der Inhaltsstoffe des Schlickers diesen über einen Zeitraum in einem Bereich von 5 bis 10 Minuten.

Vorzugsweise werden ZrO₂ Mahlkugeln einer Größe in einem Bereich von 0,5 bis 5 mm eingesetzt. Liegt die Größe der Mahlkugeln unterhalb dieses Bereiches, so lassen sich die Mahlkugeln nur noch schwer von dem oxidkeramischen Pulver trennen. Liegen die Mahlkugeln oberhalb dieses Bereiches, so entfalten sie nicht die notwendige Mahlwirkung.

Zum Vermahlen setzt man vorzugsweise die 2 bis 4 fache Menge ZrO₂ Mahlkugeln, insbesondere die etwa 3fache Menge ZrO₂ Mahlkugeln ein. Dadurch wird auch bei kurzer Mahldauer ein hinreichender Teil des oxidkeramischen Pulvers auf eine zur Sinterung hinreichend kleine Korngröße gemahlen.

Vorzugsweise sind mindestens zwei der Korngrößenfraktionen des oxidkeramischen Pulvers unabhängig voneinander in einer Menge von mindestens 10 Vol.% bezogen auf den Feststoffgehalt des Schlickers und/oder den Grünling enthalten. So können die verschiedenen Fraktionen ihrer Funktion besonders gut gerecht werden.

Man setzt vorzugsweise einen Schlicker mit einem Feststoffanteil von mindestens 30 Gew.%, insbesondere mindestens 65 Gew.% ein. Dadurch werden bei der Vortrocknung, Trocknung und/oder beim Sintern weniger flüchtige Stoffe entfernt und es kommt im Vergleich zum Stand der Technik nur noch zu weniger Schrumpfung des Grünlings relativ zum fertigen Faser-Verbundwerkstoff. Diese Schrumpfung beträgt vorteilhafterweise weniger als 2 % in jeder Längenausdehnung des Grünlings. Der maximal erreichbare Feststoffanteil ist durch die Partikelgröße der Teilchen und die dichtestmögliche Packung dieser Teilchen festgelegt.

Vorzugsweise setzt man einen Schlicker ein, der Verflüssiger in einer Menge von 0,1 bis 25 Gew.%, besonders bevorzugt 2 bis 5 Gew.% bezogen auf die Gesamtmenge des Schlickers enthält. Durch die Menge des Verflüssigers kann die dynamische Viskosität und damit, bedingt durch das erfindungsgemäße Herstellungsverfahren, der Fasergehalt des Faser-Verbundwerkstoffes gezielt eingestellt werden. Ist die Menge an Verflüssiger zu hoch, so wird im Extremfall eine nachteilige Schrumpfung des Faser-Verbundwerkstoffes bei der Trocknung und/oder bei der Sinterung beobachtet. Allgemein kommt es bei zu hohem Gehalt an Verflüssiger zu einem schlechten Zusammenhalt der entstehenden Grünlinge und zu einer schlechten Stabilität des Schlickers. Ist der Gehalt an Verflüssiger jedoch zu niedrig, so ist die dynamische Viskosität zu hoch und man kann mit dem Schlicker nicht mehr die Filamente und/oder Fasern und/oder Rovings hinreichend einheitlich benetzen und so den Gehalt der Fasern gezielt einstellen. Der Verflüssiger basiert vorteilhafterweise auf Carbonsäuren, insbesondere ausgewählt aus der Gruppe Dolaflux® (Zschimmer & Schwarz GmbH & Co.), Dolapix® (Zschimmer & Schwarz GmbH & Co.), Tiron®, Peptapon®, Optapix® und Giessfix®.

Vorteilhafterweise setzt man einen Schlicker mit einer dynamische Viskosität in einem Bereich von 10 bis 150 mPas.s, bevorzugt 20 bis 100 mPas.s, besonders bevorzugt 20 bis 50 mPas.s ein. Durch die niedrige dynamische Viskosität wird sichergestellt, dass die Endlosfasern vollständig und gleichmäßig infiltriert werden. Wird als Endlosfaser ein Roving eingesetzt, so kann durch diese niedrigen dynamischen Viskositäten der Schlicker zwischen den einzelnen Filamenten eindringen, die Einzelfilamente belegen und so zumindest teilweise voneinander beabstanden. Dies kann man auch visuell durch Aufquellen des Rovings beobachten. Durch gezielte Einstellung der dynamischen Viskosität des Schlickers (keramische Suspension) kann der Fasergehalt der Keramikverbunde in einem weiten Bereich eingestellt werden. Die dynamische Viskosität kann beispielsweise durch Variation des Feststoffgehaltes, der Kalzinierungstemperatur, Art und Menge an Verflüssiger, Mahldauer oder durch die Zugabe von Füllstoffen verändert werden.

Die dynamische Viskosität wurde mittels eines Physica Rotationsviskosimeters Rheolab MC10® bei einer Temperatur von 21 °C in 3 min unter Verwendung des Einsatzes Z1 (DIN Doublegap) mit einer Probenmenge von 53 g Schlicker bei einer Drehzahl von 0,49 s⁻¹ und einer Scherrate von 146,8 s⁻¹ gemessen.

Bevorzugt kalziniert man das oxidkeramische Pulver des Grünlings bei einer Temperatur oberhalb der Sintertemperatur, insbesondere bevorzugt bei einer Temperatur von mindestens 950 °C, ganz besonders bis zu 1300 °C, höchstens jedoch unterhalb des Schmelzpunktes. Durch diese Temperaturbehandlung wird ein oxidkeramisches Pulver erhalten, mit welchem ein Schlicker erstellt werden kann, der trotz hohem Gehalt an diesem oxidkeramischen Pulver (Feststoffgehalt) eine niedrige dynamische Viskosität aufweist.

Man setzt vorzugsweise einen bindemittelfreien Schlicker ein. Bindemittel im Sinne der Erfindung ist eine organische Substanz, die die Teilchen des Schlickers zusammenhalten kann. Insbesondere werden als Bindemittel solche auf Basis von Wachs, Polymeren und insbesondere Harzen verstanden. Für das erfindungsgemäße Verfahren wurde überraschend und entgegen der üblichen Meinung festgestellt, dass der Schlicker auch ohne Bindemittel einen mechanisch stabilen Grünling bilden kann. Dies hat den entscheidenden Vorteil, dass der Feststoffanteil an oxidkeramischem Pulver im Schlicker wesentlich höher liegen kann und so eine Schrumpfung beim Trocknen und Sintern weitgehend vermieden werden kann.

Es hat sich als besonders vorteilhaft herausgestellt, wenn die infiltrierten Endlosfasern kontinuierlich aufgewickelt werden. Dabei werden die Endlosfasern nach dem Infiltrieren mit dem Schlicker und gegebenenfalls dem Vortrocknen unter Bildung des Grünlings aufgewickelt und daraufhin der Wickelkörper getrocknet. Der Grünling kann anschließend beispielsweise mit eine Skalpell vom Wickelkörper getrennt werden. Hierdurch wird ein besonders gleichmäßiges Bilden des Grünlings realisiert, die zusätzlich eine gezielte Vortrocknung erlaubt und so eine Möglichkeit gibt, den Feststoffgehalt des Schlickers nach der Infiltration, aber vor dem Aufwickeln, zu erhöhen und somit im Endeffekt den Fasergehalt des entstehenden Grünlings gezielt zu beeinflussen.

Vorzugsweise trocknet man die infiltrierten Endlosfasern vor der Bildung des Grünlings kontinuierlich in einer Mikrowelle vor. Durch diese kontinuierliche Vortrocknung in einer Mikrowelle kommt es zu einer sehr schnellen Verdampfung der Lösungsmittel. Der Herstellungsprozess wird damit im Unterschied zum Stand der Technik wesentlich beschleunigt. Üblicherweise musste der gebildete Grünling nämlich einige Stunden an der Luft trocknen. Durch eine nachgeschaltete Antrocknung in einem kontinuierlich arbeitendem Mikrowellenofen wird durch Wasserverdampfung der Feststoffanteil des vom Roving aufgenommenen Schlickers also unmittelbar erhöht. Aufgrund der nun höheren dynamischen Viskosität wird beim abschließenden Aufwickeln ein Material mit geringerem Faservolumengehalt aufgebaut. Bei den bisher bekannten Verfahren konnte nach der Infiltrierung der Fasern mit dem Schlicker kein Einfluss auf die dynamische Viskosität beziehungsweise den Feststoffgehalt des Schlickers auf der Faser genommen werden.

In einer weiteren Ausführungsform wird die der Erfindung zu Grunde liegende Aufgabe gelöst durch einen oxidkeramischen Faser-Verbundwerkstoff gemäß Anspruch 4 erhältlich nach dem erfindungsgemäßen Verfahren. Gegenüber dem Stand der Technik hat das Formteil neben der ausreichenden mechanischen Stabilität und der einfachen, preiswerten Herstellbarkeit komplexer Bauteile den Vorteil, dass es eine geringe Wärmekapazität, Wärmeleitfähigkeit und Dichte aufweist, schadenstolerant ist, einfach bearbeitet werden kann und eine hohe Langzeitstabilität in oxidierender Atmosphäre aufweist.

Der Fasergehalt kann im erfindungsgemäßen Verfahren konkret auf bestimmte Werte eingestellt werden. Im erfindungsgemäßen Faser-Verbundwerkstoff sind Fasern in einer Menge von wenigstens 5 bis 20 Vol.%, und bevorzugt höchstens 15 Vol.% vorhanden. Bisher war eine genaue Einstellung des Fasergehaltes unmöglich und der Fasergehalt bei bereits bekannten Faser-Verbundwerkstoffen schwankte zwischen mehr als 30 bis 50 Vol.%. Überraschend wurde erfindungsgemäß gefunden, dass trotz eines gezielt eingestellten geringen Fasergehhaltes das Bruchverhalten besonders schadenstolerant war, wie es bereits oben beschrieben wurde und anhand des untenstehenden Beispiels weiter verdeutlicht wird. Dadurch und wegen des hohen Preises der Endlosfasern ist der erfindungsgemäße Faser-Verbundwerkstoff außerdem erheblich günstiger als die bekannten Verbundwerkstoffe. Die bislang bekannten Verbundwerkstoffe weisen üblicherweise einen Volumenfasergehalt von mehr als 30 bis 50 Vol.% auf.

Vorteilhafterweise liegt die Festigkeit des erfindungsgemäßen Faser-Verbundwerkstoffs im 3-Punkt-Biegeversuch in einem Bereich von 30 MPa bis 200 MPa, insbesondere in einem Bereich von 40 bis 80 MPa, die interlaminare Scherfestigkeit in einem Bereich von 2 bis 13 MPa und/oder der E-Modul in einem Bereich von 10 bis 150 GPa.

Gemäß der vorliegenden Erfindung kann vorteilhafterweise ein Faser-Verbundwerkstoff erhalten werden, der zum einen einen besonders niedrigen Volumenfasergehalt wie bereits erwähnt aufweist und gleichzeitig obenstehende hervorragende mechanische Eigenschaften besitzt.

Die Matrixporosität des erfindungsgemäßen Faser-Verbundwerkstoffs liegt vorteilhafterweise in einem Bereich von 40 bis 80 Vol.%, insbesondere 70 bis 80 Vol.%. Dadurch besitzt der erfindungsgemäße Faser-Verbundwerkstoff trotz guter mechanischer Eigenschaften eine sehr gute Wärmedämmwirkung. Die Porosität wurde durch Vergleich des gewogenen Formkörpers und dem durch die theoretischen Dichte der verwendeten Stoffe gegebenen Gewicht bezogen auf das gleiche Volumen ermittelt.

Die erfindungsgemäßen Faser-Verbundwerkstoffe können beispielsweise eingesetzt werden in Brenngestellen (Sinterhilfsmittel), Auskleidungen von Hochtemperaturöfen, thermischen Nachverbrennungsanlagen und Wärmeisolierungen.

### Ausführungsbeispiel:

Zur Herstellung des Schlickers wurde zunächst das oxidkeramische Böhmit-Pulver PURAL SB (Hersteller: Sasol, Hamburg; spezifische Oberfläche: 256 m²/g; Al₂O₃-Gehalt: etwa 75 Gew.%) bei 1200 °C etwa 5 h kalziniert. Anschließend wurden zu 65 g dieses kalzinierten oxidkeramischen Pulvers 2 g Verflüssiger Dolapix® CE64 (Hersteller:
Zschimmer & Schwarz, Lahnstein; Polycarbonsäurebasis) und 180 g ZrO₂-Kugeln mit einem durchschnittlichen Durchmesser von 1 mm mit 33 g Wasser auf einer Planetenkugelmühle (PM4000 der Firma Retsch®) 10 min mischgemahlen. Die dynamische Viskosität des Schlickers betrug 91 mPas.s.

Die oxidkeramische Faser (vorliegend als Roving, also einem Bündel von Einzelfilamenten) Nextel® 720 3000 Denier wurde wie vom Hersteller geliefert zunächst durch einen Rohrofen mit einer Temperatur von 1100°C, um das Sizing (epoxidartige Verklebung der Rovings) auszubrennen. Anschließend erfolgte die Infiltration der kontinuierlichen Fasern in dem oben beschriebenen Schlicker, indem die Faser durch einen Kanal enthaltend den Schlicker gezogen wurde.

Die Rovings wurden in einem kontinuierlich arbeitenden Mikrowellenofen angetrocknet. Hierbei verdampften etwa 20 Gew.% des Wassers, was zu einer Steigerung der dynamischen Viskosität auf einen Wert oberhalb von 100 mPas.s geführt hat. Mit einer mittleren Geschwindigkeit von 16 m/min wurden die Rovings auf einem mit einer Trennfolie belegten zylindrischen Kern aufgewickelt. Der noch etwas feuchte Grünling wurde nach Einschneiden mit einem Skalpell vom Kern entnommen, auf eine Gipsplatte gelegt und im Trockenschrank bei etwa 60°C 4h getrocknet. Die abschließende Sinterung erfolgte in einem Kammerofen bei 1350 °C 60 min an Luft.

Dieser oxidkeramische Verbund hatte eine Dichte von 1,44 g cm⁻³, einen Faservolumengehalt von 11 % und eine Matrixporosität von 72 %.

Die interlaminare Scherfestigkeit (ILLS) betrug 4,9 MPa, die 3-Punkt-Biegefestigkeit betrug 60 MPa und der E-Modul betrug 21 GPa.

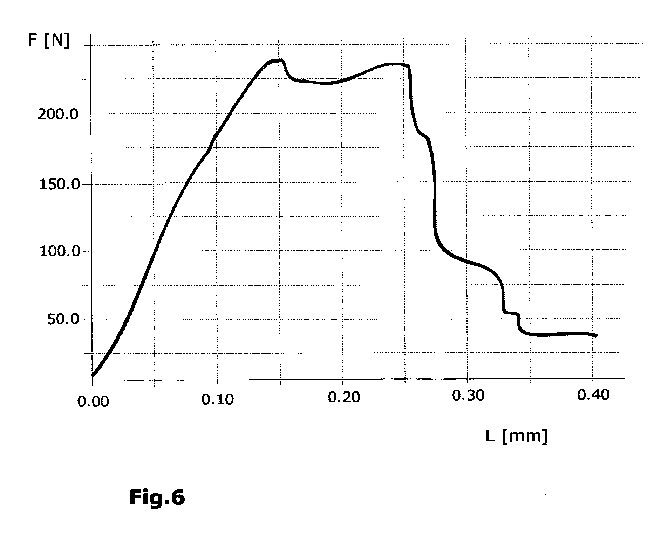

Das Bruchverhalten ist anschaulich im Spannungs-Dehnungs-Diagramm in Fig. 6 dargestellt. Man erkennt deutlich, dass trotz des niedrigen Fasergehaltes nach einem ersten Bruch bei einer Auslenkung von etwa 0,15 mm und einer Bruchspannung von etwa 247 N die Spannung zunächst schadenstolerant vom erfindungsgemäßen Faser-Verbundwerkstoff auf etwa gleichem Niveau gehalten wurde. Erst nach einem zweiten Bruch bei einer Auslenkung von etwa 0,25 mm und einer Bruchspannung von etwa 245 N gab der Faser-Verbundwerkstoff etwas nach. Die Spannung fiel zunächst auf etwa 180 N ab. Nun brach der Faser-Verbundwerkstoff in mehreren Schritten, bis er bei einer Auslenkung von etwa 0,35 mm endgültig brach.

## Patentansprüche

1. Verfahren zur Herstellung eines oxidkeramischen Faser-Verbundwerkstoffes, umfassend die folgenden Schritte:
a) Infiltrieren von oxidkeramischen Endlosfasern mit einem Schlicker enthaltend sinteraktives oxidkeramisches Pulver mit wenigstens zwei voneinander verschiedenen Korngrößenfraktionen unterschiedlicher Maxima in der Korngrößenverteilung, wobei mindestens eine der Korngrößenfraktionen eine mittlere Korngröße gewichtet nach Volumenanteilen von bis zu 1 µm und mindestens eine weitere Korngrößenfraktion eine mittlere Korngröße gewichtet nach Volumenanteilen von mindestens 2 µm aufweist, wobei die Korngrößenfraktion mit der größeren mittleren Korngröße gewichtet nach Volumenanteilen einen geringeren Volumenanteil ausmacht, als die Korngrößenfraktion mit der kleineren mittleren Korngröße, wobei die Korngrößenfraktionen im Faser-Verbundwerkstoff unabhängig voneinander zu jeweils mindestens 10 Vol.% vorliegen,
b) Trocknen des gemäß Schritt a) erhaltenen Grünlings, und
c) Sintern des Grünlings unter Bildung des oxidkeramischen Faser-Verbundwerkstoffes.

2. Verfahren gemäß Anspruch 1, **dadurch gekennzeichnet, dass** man oxidkeramisches Pulver mit mindestens einer Korngrößenfraktion einer mittleren Korngröße von bis zu 0,5 µm einsetzt.

3. Verfahren gemäß einem der vorhergehenden Ansprüche, **dadurch gekennzeichnet, dass** man oxidkeramisches Pulver mit mindestens einer weiteren Korngrößenfraktion mit einer mittleren Korngröße gewichtet nach Volumenanteilen von mindestens 10 µm einsetzt.

4. Oxidkeramischer Faser-Verbundwerkstoff erhältlich nach einem Verfahren gemäß einem der vorhergehenden Ansprüche **dadurch gekennzeichnet, dass** der Fasergehalt in einem Bereich von 5 bis 20 Vol.% liegt.

## Claims

1. A process for preparing an oxide-ceramic fiber composite, comprising the following steps:
a) infiltrating continuous oxide-ceramic fibers with a slip containing sinter-active oxide-ceramic powder with at least two different grain size fractions with different peaks in the grain size distribution, wherein at least one of said grain size fractions has an average grain size weighted by volume fractions of up to 1 µm, and at least one other grain size fraction has an average grain size weighted by volume fractions of at least 2 µm, wherein said grain size fraction having the larger average grain size weighted by volume fractions constitutes a lower volume proportion than that of the grain size fraction having the smaller average grain size, wherein said grain size fractions are each independently present in said fiber composite at at least 10% by volume;
b) drying the green body obtained according to step a); and
c) sintering the green body to form said oxide-ceramic fiber composite.

2. The process according to claim 1, **characterized in that** an oxide-ceramic powder having at least one grain size fraction with an average grain size of up to 0.5 µm is employed.

3. The process according to any of the preceding claims, **characterized in that** an oxide-ceramic powder having at least one other grain size fraction with an average grain size weighted by volume fractions of at least 10 µm is employed.

4. An oxide-ceramic fiber composite obtainable by a process according to any of the preceding claims, **characterized in that** the fiber content is within a range of from 5 to 20% by volume.

## Revendications

1. Procédé pour fabriquer un matériau composite à fibres d'oxydes céramiques, comprenant les étapes consistant à :
a) infiltrer des fibres continues d'oxydes céramiques avec une barbotine contenant une poudre de céramique oxyde apte au frittage comportant au moins deux fractions granulométriques différentes avec des pics différents dans la granulométrie, au moins une des fractions granulométriques ayant une granulométrie moyenne pondérée par titres volumiques de jusqu'à 1 µm, et au moins une autre fraction granulométrique ayant une granulométrie moyenne pondérée par titres volumiques d'au moins 2 µm, la fraction granulométrique avec la granulométrie moyenne pondérée par titres volumiques supérieure représentant une titre volumique inférieure à celle de la fraction granulométrique avec la granulométrie moyenne pondérée par titres volumiques inférieure, les fractions granulométriques constituant indépendamment au moins 10 pour cent en volume dans ledit matériau composite à fibres ;
b) sécher le corps vert obtenu selon l'étape a) ; et
c) fritter le corps vert pour former ledit matériau composite à fibres d'oxydes céramiques.

2. Procédé selon la revendication 1, **caractérisé en ce qu'**une poudre de céramique oxyde comportant au moins une fraction granulométrique avec une granulométrie moyenne de jusqu'à 0,5 µm est utilisée.

3. Procédé selon l'une quelconque des revendications précédentes, **caractérisé en ce qu'**une poudre de céramique oxyde comportant au moins une autre fraction granulométrique avec une granulométrie moyenne pondérée par titres volumiques d'au moins 10 µm est utilisée.

4. Matériau composite à fibres d'oxydes céramiques pouvant être obtenu par un procédé selon l'une quelconque des revendications précédentes, **caractérisé en ce que** la teneur en fibres est comprise entre 5 et 20 pour cent en volume.
